# EUROPEAN PATENT APPLICATION

(11) **EP 1 437 044 A2**
(43) Date of publication of application: **14.07.2004**
(21) Application number: 03257851.0
(22) Date of filing: 15.12.2003
(51) Int. Cl.: A01N 25/02, A01N 43/78, A01N 43/16, A01N 43/12, A01N 35/06, E04B 1/72

(54) **Algae growth inhibitor and method of algae growth inhibition**

(30) Priority: 16.12.2002 JP 2002363634
(71) Applicant: Chubu Electric Power Co., Inc., Nagoya-shi, Aichi-ken 461-8680 (JP); Tokai Concrete Industries Co., Ltd., Nagoya-shi, Aichi-ken 451-0041 (JP)
(72) Inventor: Sugiyama, Takeshi C/o Chubu Electric Power Co.Inc, Aichi-ken, 461-8680 (JP); Sawa, Katsunori c/o Chubu Electric Power Co.,Inc., Aichi-ken 461-8680 (JP); Wada, Hiroyoki c/o Chubu Electric Power Co.,Inc., Aichi-ken 461-8680 (JP); Kato, Hajime, Chiba-ken 261-0003 (JP); Imai, Nabuhiro C/o Tokai Concete Ind. Co.,Ltd., Nagoya-shi, Aichi-ken 451-0041 (JP); Kashiwadani, Hiroyuki, Ibaraki-ken 305-0031 (JP)
(74) Representative: Beresford, Keith Denis Lewis

(57) **Abstract**

The invention is an algae growth inhibitor for blue-green algae, lichens and others, which comprises a chemical (A) having a low solubility in water and having the ability to inhibit the growth of algae, and an organic solvent (B) that dissolves the chemical (A) with the solubility of the chemical (A) in it being larger than that in water, and is miscible with water. The invention ensures the condition (characteristic) of long-term lasting diffusion (back diffusion) of the chemical (A) on the surface of an object to be protected, thereby sustaining the algae growth inhibiting effect of the inhibitor for a long period of time.

## Description

The present invention relates to an algae growth (propagation, proliferation) inhibitor and a method of algae growth inhibition for epiphytes such as blue-green algae, lichens, mosses, algae and others (hereinafter referred to as algae) that grow on various faces such as surfaces, sides or backs of, for example, concrete structures, concrete products, concrete remains, stone statues, stone images of the Buddha, stone remains and others (hereinafter referred to as objects).

Years of studies and experiments on the causes of the dirt including staining, fading, discolouration and the like of the objects of the type as above have revealed that the essential cause of it is the growth of algae on the surfaces of the objects.

For exterminating (blighting) these sorts of algae or for inhibiting their growth, for example, there are known the physical methods of washing or brushing, a method of directly applying a chemical having an action of blighting algae or having an action of inhibiting the growth of algae (generally, water-soluble chemicals such as algaecides, fungicides) to algae, and a method of specifically processing algae that adhere to and/or root in the surfaces of objects to kill them and/or inhibit their growth to thereby weaken the algae.

Of those various methods, the present applicant has improved the method of exterminating algae by blighting them and/or inhibiting their growth to weaken them, has proposed an invention relating to the improved method of inhibiting the growth of algae and exterminating them, and has obtained a patent for the invention. This is Japanese Patent No. 2,728,238, and the title of the invention is "Remover for Blue-Green Algae and Lichens, and Method for Removing Blue-Green Algae and Lichens from Concrete Structures" (this is referred to as patent reference 1). In the patented invention, there is utilized the action (ability) of the remover to inhibit the growth of algae, in which the remover comprises, as the active ingredient thereof, usnic acid and an usnic acid solvent, and the object of the patent invention is to blight blue-green algae and lichens. Another reference discloses a composition for inhibiting the growth of pollutant organisms (e.g., algae, lichens), in which is used usnic acid of that type. For example, it is JP-A 11-100531, and the title of the invention is "Antipollutive, Silane-Based Waterproof Composition (this is referred to as patent reference 2). The object of the invention is to protect objects, to inhibit the growth of pollutive organisms and to blight pollutive organisms. However, the constitution of the invention of patent reference 2 comprises utilizing the waterproofness and the water repellency of the antipollutive, silane-based waterproof composition, and it is attained merely by modifying usnic acid to be waterproof.

The invention of Japanese Patent No. 2,728,238 is an algae remover that comprises usnic acid and an usnic acid solvent as the active ingredient thereof, and its object is to blight algae by utilizing the action of the remover to inhibit the growth of algae. Observing the result of the patent invention for many years has confirmed that the remover has an action of inhibiting the growth of algae and its algae growth inhibiting action is kept long. However, when it is intended to further enhance the durability of the algae growth inhibiting action of the remover of patent reference 1, it has been found that there still remains a region not as yet clarified for that purpose (specifically, it has been found that the algae growth inhibiting action of some type of the remover to blight algae is limited only within a certain period of time). To compensate for that region, a constitution that we the present inventors have newly found is indispensable. Concretely, a chemical (A) that has the action of inhibiting the growth of algae is crystallized in the voids of an object to thereby from a layer of the chemical (A) therein, and even after the area inside the voids has become as similar as possible to an aqueous solution, the chemical (A) layer is kept still serving as a supply source of the chemical (A). Specifically, the chemical (A) layer is brought into contact with the external water at the openings of the voids in the surface of the object or at the openings of the recesses of the rough surface thereof and is thereby gradually diffused and diluted, and after thus repeatedly diffused and diluted, the chemical (A) is led to the surface of the object. We the present inventors have judged that this mechanism is indispensable for the intended purpose. Given that situation, the present invention is to ensure the necessary requirement, and to provide an algae growth inhibitor capable of realizing a further longer durability thereof and a method of algae growth inhibition with it.

In the present invention, the algae growth inhibitor is kept in repeated contact (meeting) with external water for repeated diffusion and dilution thereof, and in that condition, the chemical (A), or that is, the constitutive element of the inhibitor that has the ability to inhibit the growth of algae is deposited in the voids of the object to be protected and is crystallized therein, and the area inside the voids is all the time kept filled with an saturated solution of the chemical (A). Satisfying these requirements, the invention is to ensure the condition (characteristic) of long-term lasting diffusion (back diffusion) of the chemical (A) on the surface of the object to thereby sustain the algae growth inhibiting effect of the inhibitor for a long period of time.

According to a first aspect of the invention, there is provided an algae growth inhibitor for blue-green algae, lichens and others, which comprises a chemical (A) having a low solubility in water and having the ability to inhibit the growth of algae, and an organic solvent (B) that dissolves the chemical (A) with the solubility of the chemical (A) in it being larger than that in water, and is miscible with water.

In one embodiment, there is provided an algae growth inhibitor for blue-green algae, lichens and others, wherein the chemical (A) is deposited and crystallized at least in the fine voids inside the object to be protected or in the recesses of the rough surface of the object to stay therein for a long period of time, and the crystallized chemical (A) dissolves in the external water in the voids or in the surface recesses and continues gradually dissolving out on the surface of the object to thereby keep its action (effect) of algae growth inhibition for blue-green algae, lichens and others for a long period of time.

The invention further provides a method of algae growth inhibition that ensures the long-lasting durability of the algae growth inhibiting effect of the inhibitor of claims 1 and 2. This is a method of algae growth inhibition for blue-green algae, lichens and others, and is characterized in that the algae growth inhibitor of claim 1 having penetrated at least into the fine voids inside the object coated or sprayed with it or into the recesses of the rough surface of the object comes in contact with external water such as rainwater or flowing water and, through diffusion or dilution thereof, deposits the chemical (A) that corresponds to the difference between the solubility thereof in the organic solvent (B) and that in water, in the external water in the voids or in the surface recesses of the object, and the chemical (A) is thus successively deposited while forming a layer of the chemical (A) crystallized in the voids or in the surface recesses, and then, when the area inside the voids and in the surface recesses is as similar as possible to an aqueous solution, the chemical (A) layer serves as a supply source of the chemical (A), and the deposited and crystallized chemical (A) layer gradually dissolves out on the surface of the object through contact with the external water at the openings of the voids or at the openings of the surface recesses and keeps its action of algae growth inhibition for a long period of time to kill the blue-green algae, lichens and others around the object.

The algae growth inhibitor of the invention comprises a chemical (A) having a low solubility in water and having the ability to inhibit the growth of algae, and an organic solvent (B) that dissolves the chemical (A) with the solubility of the chemical (A) in it being larger than that in water, and is miscible with water. In view of the object of the invention, the blend ratio of the chemical (A) to the organic solvent (B) is basically within the range within which the chemical (A) may dissolve in the organic solvent (B). The blend ratio varies, depending on the combination of the chemical (A) and the organic solvent (B) to be used.

Embodiments of the present invention will now be described in detail with reference to the accompanying drawings, in which:

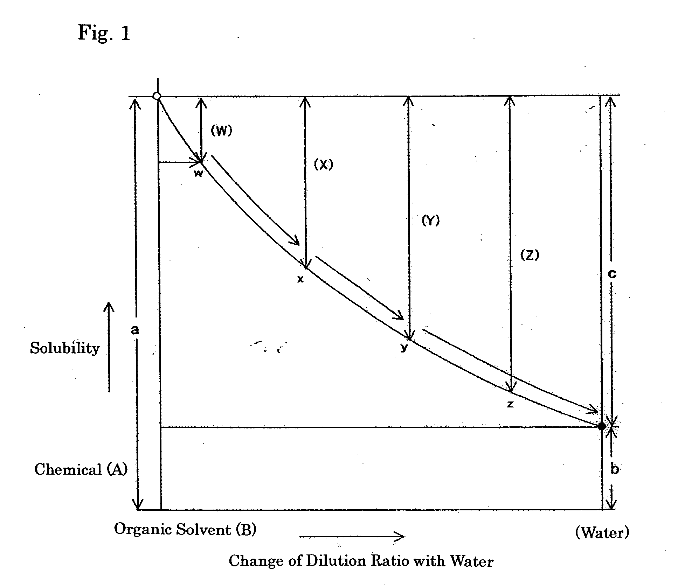

Figure 1 shows the relationship between the solubility a of the chemical (A) of the algae growth inhibitor in the organic solvent (B) thereof, the solubility b of the chemical (A) in water, and the dilution ratio of the algae growth inhibitor in water.

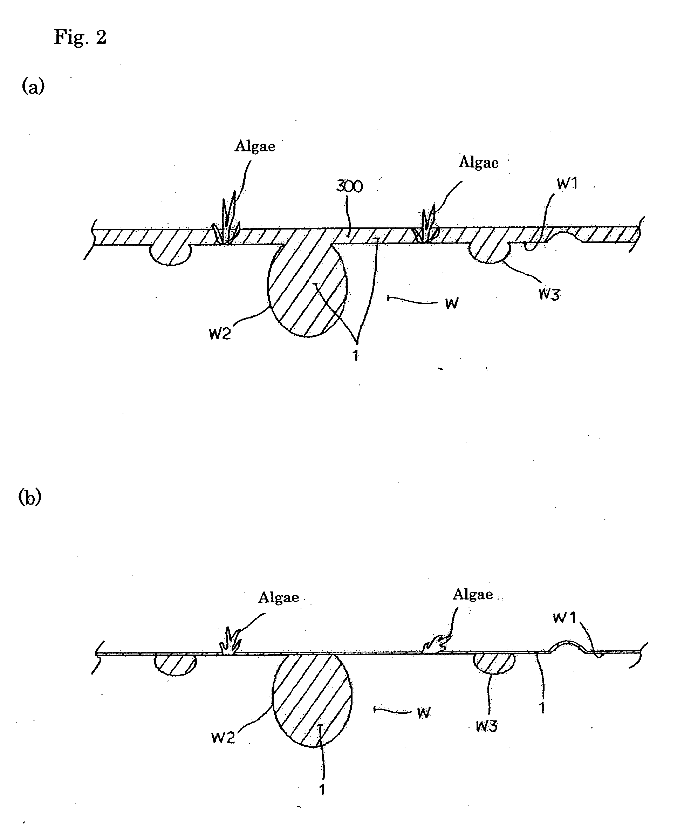

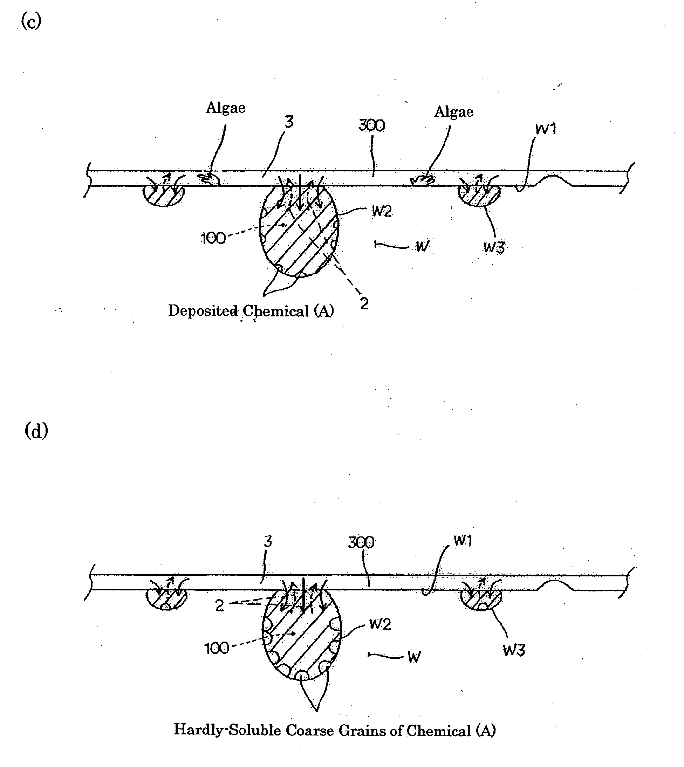

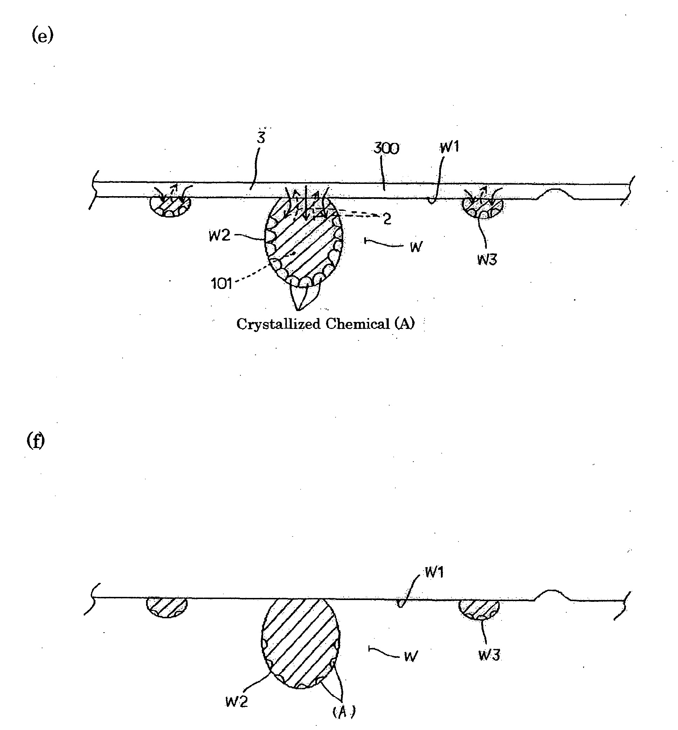

Figures 2 (a) to (f) are schematic views for explaining the application, the diffusion and the dilution of the algae growth inhibitor. In Figure 2(a), the algae growth inhibitor was applied to an object, and it penetrated into it. In Figure 2 (b), the voids of the objects were filled with the algae growth inhibitor having penetrated thereinto. In Figures 2 (c) to (e), the algae growth inhibitor was diffused and diluted, and the chemical (A) was deposited and formed its coarse grains. Figures 2 (d) to (f) show the effect of the algae growth inhibitor, and in these, the algae peeled away.
The algae growth inhibition by the algae growth inhibitor 1 and the durability thereof are inspected on the basis of Fig. 1 and Fig. 2. Fig. 1 shows the relationship between the solubility a of the chemical (A) of the algae growth inhibitor 1 in the organic solvent (B) thereof, the solubility b of the chemical (A) in water, and the dilution ratio of the algae growth inhibitor 1 in water. In the illustrated cases, it is supposed that the algae growth inhibitor 1 comprises the chemical (A) that has a low solubility in water and has the ability to inhibit the growth of algae, and the organic solvent (B) that dissolves the chemical (A) with the solubility of the chemical (A) in it being larger than that in water, and is miscible with water, in which the solubility of the chemical (A) in the solvent (B) is about 5 times (one case) that in water, and this example is described below.

In Fig. 1, the vertical axis indicates the solubility and the horizontal axis indicates the change of the dilution ratio with water. In that condition, the relationship between the deposition of the chemical (A) and the dilution thereof with the organic solvent (B) and with external water 3 is described with the lapse of time. The summary of this description is as follows: The chemical (A) dissolved in the organic solvent (B) comes in contact with the external water 3, then this is diffused and diluted to give a solution 100 that contains the chemical (A), and this successively deposits the chemical (A). With that, the dilution with the external water 3 promotes the formation of coarse grains of the chemical (A) and a layer of the thus-crystallized chemical (A) is thereby formed. After that, the chemical (A) layer is diluted with the external water 3 and serves as the supply source of the chemical (A) to the voids W2, and the voids W2 are kept saturated to thereby have therein a solution 101 of the chemical (A) that is as similar as possible to an aqueous solution. Accordingly, the voids W2 continue to keep the saturated condition, and the algae growth inhibiting effect of the chemical (A) is sustained for an extremely long period of time.

In Fig. 1, the top "O" of the vertical axis indicates the condition of the chemical (A) that is dissolved in the organic solvent (B) at the solubility (a). Figs. 2(a) and (b) are enlarged schematic views that show the condition of the algae growth inhibitor 1 applied to an object W, in which the organic solvent (B) with the chemical (A) dissolved therein has penetrated into the voids W2 of the object W.

The line from w to x to y along the vertical axis in Fig. 1 indicates a process of the saturated dissolution of the chemical (A) in the organic solvent (B) to the diffusion and dilution of the chemical (A) in the external water 3 that has come into contact with the chemical (A). In this process, (W), (X) and (Y) indicate the amount of the chemical (A) that has been diffused and diluted through contact with the external water 3 to give the solution 100, and the chemical (A) that is deposited corresponds to the difference between the solubility thereof in the organic solvent (B) and that in water. Fig. 2(c) is an enlarged schematic view that shows this condition. (W) indicates that a small amount of the chemical (A) has been diffused, diluted and deposited through contact with the external water 3.

In Fig. 1, the process from y to z indicates the condition in which a part of the organic solvent (B) with the chemical (A) dissolved therein is diluted to give the solution 100 and this deposits the chemical (A), while, on the other hand, the hardly-soluble coarse grains of the chemical (A) remain as such and the formation of the coarse grains has been promoted (to give the crystallized chemical (A) layer). (Z) indicates the amount of the chemical (A) that has been deposited by its solubility difference as a result of the promoted diffusion and dilution through the contact thereof with the external water. Figs. 2(d) and (e) are enlarged schematic views that show this condition.

In Fig. 1, the process from z to • along the horizontal axis indicates the condition in which the organic solvent (B) with the chemical (A) dissolved therein is diluted to deposit the chemical (A) that corresponds to the solubility difference, and the formation of coarse grains of the chemical (A) is promoted to form the layer of the crystallized chemical (A). This • shows the difference c between the solubility of the chemical (A) in the organic solvent (B) and that in water (a - b = c). The solution 100 that contains the chemical (A) comes in contact with the external water 3 and is diffused and diluted, and the area inside the voids W2 keeps the saturated condition to give a solution 101 that contains the chemical (A) and is as similar as possible to an aqueous solution. With that, the chemical (A) layer existing inside the voids W2 serves as the supply source of the chemical (A) for the subsequent dilution, and therefore the algae growth inhibiting effect of the chemical (A) layer is kept for an extremely long period of time. In other words, so far as the chemical (A) exists in the voids W2, it is continuously supplied to the surface W1 of the object W and, as a result, it continues to act to inhibit the growth of algae on the surface of the object.

With that, when the chemical (A) layer still exists in the voids W2 (Fig. 2(f) shows this condition) and when it is again exposed to external water 3, then it is diluted and supplies the chemical (A) to the solution 101 inside the voids W2 to thereby further keep the saturated condition. Since this saturated condition is kept as such for a long period of time, the algae growth inhibiting effect of the chemical (A) layer is sustained so far as the saturated condition is kept as such and, the chemical (A) layer is thereafter thinned. Fig. 2(f) is an enlarged schematic view that shows this condition. The chemical (A) is then exhausted, and the chemical (A) layer disappears. After the solution 101 of the chemical (A) in the voids W2 has been further diluted and has supplied the chemical (A) to the surface W1, then it is completely substituted with water. In that condition, the algae growth inhibiting effect ends. The time to be taken before the chemical (A) disappears from the voids W2 is extremely long, and it has been found that the chemical (A) exhibits its algae growth inhibiting effect for such a long period of time.

Some embodiments of the invention are described below. The chemical (A) of the invention is a substance that has a low solubility in water and has the ability to inhibit the growth of algae. For example, it includes usnic acid, 2-(4-thiazolyl)benzimidazole, anthraquinone-carboxylic acid, anthraquinone, and coumarin. The organic solvent (B) is a substance that dissolves the chemical (A) with the solubility of the chemical (A) in it being larger than that in water, and is miscible with water. For example, it includes ketone solvents such as methyl isobutyl ketone; alcohol solvents such as ethylene glycol, diethylene glycol, furfuryl alcohol; and ether solvents such as diethylene glycol dimethyl ether, diethylene-methanol dimethyl ether. Through the experiments, the present inventors have confirmed that the requirements that the chemical (A) has a low solubility in water and has the ability to inhibit the growth of algae, and that the organic solvent (B) dissolves the chemical (A) with the solubility of the chemical (A) in it being larger than that in water, and is miscible with water are indispensable to the present invention. As a result, It has been further confirmed that for the organic solvent (B) which dissolves the chemical (A), the solubility of the chemical (A) in the solvent (B) is preferably at least about two times larger than that in water, and the solvent (B) is miscible with water.

The practice of applying the algae growth inhibitor 1 to objects to be protected and the effects thereof are described in detail hereinunder with reference to Fig. 2. Fig. 2(a) shows a condition of the algae growth inhibitor 1 partly applied to the surface W1 of an object W and to the voids W2 and the recesses W3 of the roughened surface of the object (hereinafter referred to as "voids W2"), in which the surface W1 and the voids W2 are partly covered with the inhibitor 1.

Fig. 2(b) shows the condition of the surface W1 of the object W, in which the algae growth inhibitor 1 applied to the object W has penetrated almost all the voids W2 of the object W and the surface W1 thereof has been exposed out.

In Figs. 2(c) to (f), the algae growth inhibitor 1 is kept in contact with the external water 3 at the openings of the voids W2 (the openings are preferably as narrow as possible to reduce the contact of the inhibitor 1 with the external water 3 at them) or the recesses W3 of the rough surface of the object W are covered with a film 300 of the external water 3, whereby the algae growth inhibitor 1 is diluted to give a solution 100 and the solution 100 exists inside the voids W2. The solution 100 is diluted with the external water 3 that diffuses and penetrates into the voids W2, and the chemical (A) therefore continues to diffuse (in a mode of back diffusion) to the surface W1 of the object W. In the solution 100 that contains the chemical (A) therein, the chemical (A) is deposited corresponding to the difference between the solubility thereof in the organic solvent (B) and that in water, and both the solution 100 with the chemical (A) dissolved therein and the deposited chemical (A) exist inside the voids W2. After this, the object W is exposed to external water 3 many times or is kept in contact with external water for a long period of time, whereby the deposited chemical (A) successively increases to form its coarse grains, and the solution 100 with the chemical (A) therein finally forms hardly-soluble coarse grains of the chemical (A), as in Fig. 2(d). Next, when the object W is further exposed to external water 3 or is kept in contact with external water for a long period of time, then the deposited crystals of the chemical (A) grow, or that is, the formation of the coarse grains of the chemical (A) is promoted to give a layer of the crystallized chemical (A), as in Fig. 2(e). On the other hand, the solution 100 with the chemical (A) therein becomes a solution 101 still with the chemical (A) but as similar as possible to an aqueous solution, and it stays in the voids, while the crystallized chemical (A) layer is thereafter diluted to serve as a supply source of the chemical (A) to the voids and it keeps the saturated condition in the voids. The saturated condition is kept as such for an extremely long period of time. So far as the saturated condition is kept as such, the chemical (A) layer continues to exhibit its algae growth inhibiting effect. After this, the solution 101 with the chemical (A) therein is repeatedly contacted with external water 3 many times, therefore continuing to keep the diffusion and dilution (back diffusion) of the chemical (A) for a long period of time, and, as a result, the chemical (A) flows out (dissolves out) on the surface of the object W and effectively acts for blighting the algae that grow on the surface of the object W or those that will newly adhere to and grow on it and for peeling the algae. Through the process, the chemical (A) layer is successively thinned (see Fig. 2(f)). After the chemical (A) in' the voids has been almost completely substituted with water, the algae growth inhibiting effect of the chemical (A) ends. The algae growth inhibitor of the invention follows the process of Fig. 2 (c) to (f), and inhibits the reproduction of algae for many years.

Regarding its requirements, for example, the organic solvent (B) preferably has a low surface tension as one factor of its penetration into objects. Also preferably, the volatility of the organic solvent (B) is low.

### [Examples]

Details of field experiments with the algae growth inhibitor of the invention are described below by way of examples of the invention.

This is an experiment for growth inhibition of lichens (*Physciella melanchra*) having adhered to and grown on test objects (corrugated slate plates). The test objects were set under the eaves of a factory under which they could receive rainwater and sunlight.

The chemical (A) is any of usnic acid, anthraquinone or coumarin. The organic solvent (B) is any of alcohol solvents, ethylene glycol or furfuryl alcohol, or ether solvents, diethylene glycol dimethyl ether or diethylene-methanol dimethyl ether. The chemical (A) and the organic solvent (B) were mixed and dissolved to give an algae growth inhibitor 1. The algae growth inhibitor 1 was applied to the test objects to confirm its action on lichens. Concretely, the test method is as follows: Water is sprayed on the test objects and visually checked them for color change, from which the growth or the death of the lichens on the test objects is confirmed. The reason why the test objects are visually checked for color change is as follows: The lichens of this variety are of a type of plant (organism) that grows through the interaction with mycobionts and phycobionts. Therefore, when they are sprayed with water as so mentioned hereinabove, then they turn green if they are living, but in the other cases for example when they are dead, then they turn any other color than green. Accordingly, this color change is visually monitored to confirm the growth or the death of the tested lichens. In that manner, the test objects are visually monitored with time, and the process is concretely described below.
<1> Table 1 sets out the effect of the algae growth inhibitor that comprises anthraquinone as the chemical (A) and ethylene glycol as the organic solvent (B), and the inhibitor was applied to test objects. This is described. The blend ratio of the chemical (A) to the organic solvent (B) in this experiment is 0.5/100 by weight, or that is the chemical (A) (0.5) was mixed in the organic solvent (B) (100). The same shall apply to the other experiments to be mentioned hereinunder.
   The chemical (A), anthraquinone and the organic solvent (B), ethylene glycol were mixed and dissolved to prepare an algae growth inhibitor 1-1. Thus dissolved, the algae growth inhibitor 1-1 was tested for its algae growth inhibiting effect.
   1) The algae growth inhibitor 1-1 was applied to test objects each in an area of about 10 cm² thereof. Lichens were growing in the site to which the inhibitor was applied. In visual observation of the test objects, the color of the lichens having received the inhibitor changed within a few hours.
   2) Three days after the inhibitor application to the test objects, blighted lichens were found. The overall observation of the test objects confirmed that almost all the lichens in the inhibitor-applied area turned dark brown and, even after sprayed with water, they did not turn green. It is judged that the color change into dark brown is owing to the effect of the algae growth inhibitor 1-1.
   3) 17 days after the inhibitor application thereto, the test objects were again inspected. Almost all the lichens in the inhibitor-applied area were more remarkably dark brown. Accordingly, it is judged that this color change is owing to the effect of the algae growth inhibitor 1-1.
   4) One month after the inhibitor application thereto, the test objects were inspected. Some blighted lichens (dead lichens) peeled away.
   5) Six months after the inhibitor application thereto, the test objects were inspected. More blighted lichens peeled away, and the ratio of the blighted lichens that had peeled away was about 80 % of all the blighted lichens. Accordingly, the effect of the algae growth inhibitor 1-1 is more remarkable.
   6) One year after the inhibitor application thereto, the test objects were inspected. Almost all the lichens were blighted, and the blighted lichens peeled away. As a result, the tested square area of about 10 m² to which the inhibitor had been applied became exposed out, or that is, the area of the test object restored its original slate face. This confirms that the effect of the algae growth inhibitor 1-1 lasted as such even after one year.
   7) One and a half years after the inhibitor application thereto, the test objects were inspected. In this stage, the condition as in the stage after one year was confirmed as such, and reproduction of no lichens was seen. Accordingly, this supports the long-lasting effect of the algae growth inhibitor 1-1.
   8) Three and a half years after the inhibitor application thereto, the test objects were inspected. Reproduction of no lichens was seen. Accordingly, this further supports the long-lasting effect of the algae growth inhibitor 1-1.
<2> Table 2 sets out the effect of the algae growth inhibitor that comprises coumarin as the chemical (A) and diethylene glycol dimethyl ether as the organic solvent (B), and the inhibitor was applied to test objects. This is described.
   The chemical (A), coumarin and the organic solvent (B), diethylene glycol dimethyl ether were mixed and dissolved to prepare an algae growth inhibitor 1-2. The resulting mixture, the algae growth inhibitor 1-2 was tested for its algae growth inhibiting effect.
   1-A) The algae growth inhibitor 1-2 was applied to test objects each in an area of about 10 cm² thereof. Lichens were growing in the site to which the inhibitor was applied. In visual observation of the test objects, the color of the lichens having received the inhibitor changed within a few hours.
   2-A) Three days after the inhibitor application to the test objects, blighted lichens were found. The overall observation of the test objects confirmed that about 70 % of the lichens in the inhibitor-applied area turned dark brown and, even after sprayed with water, they did not turn green. It is judged that the color change into dark brown is owing to the effect of the algae growth inhibitor 1-2.
   3-A) 17 days after the inhibitor application thereto, the test objects were again inspected. Almost all the lichens in the inhibitor-applied area were dark brown, and this confirms the blighted condition of the lichens. Accordingly, it is judged that the algae growth inhibitor 1-2 was effective to kill the lichens.
   4-A) One month after the inhibitor application thereto, the test objects were inspected. More blighted lichens were found, and some blighted lichens (dead lichens) peeled away. This confirms the practicable effect of the algae growth inhibitor 1-2.
   5-A) Six months after the inhibitor application thereto, the test objects were inspected. More blighted lichens peeled away, and the ratio of the blighted lichens that had peeled away was about 90 % of all the blighted lichens. Accordingly, the effect of the algae growth inhibitor 1-2 is more remarkable.
   6-A) One year after the inhibitor application thereto, the test objects were inspected. Almost all the lichens were blighted, and the blighted lichens peeled away. As a result, the tested square area of about 10 cm² to which the inhibitor had been applied became exposed out, or that is, the area of the test object restored its original slate face. This confirms that the effect of the algae growth inhibitor 1-2 lasted as such even after one year.
   7-A) One and a half years after the inhibitor application thereto, the test objects were inspected. In this stage, the condition as in the stage after one year was confirmed as such, and reproduction of no lichens was seen. Accordingly, this supports the long-lasting effect of the algae growth inhibitor 1-2.
   8-A) Three and a half years after the inhibitor application thereto, the test objects were inspected. Reproduction of no lichens was seen. Accordingly, this further supports the long-lasting effect of the algae growth inhibitor 1-2.
<3> Table 3 sets out the effect of the algae growth inhibitor that comprises 2-(4-thiazolyl)benzimidazole as the chemical (A) and methyl isobutyl ketone as the organic solvent (B), and the inhibitor was applied to test objects. This is described.
   The chemical (A), 2-(4-thiazolyl)benzimidazole and the organic solvent (B), methyl isobutyl ketone were mixed and dissolved to prepare an algae growth inhibitor 1-3. The resulting mixture, the algae growth inhibitor 1-3 was tested for its algae growth inhibiting effect.
   1-B) The algae growth inhibitor 1-3 was applied to test objects each in an area of about 10 cm² thereof. Lichens were growing in the site to which the inhibitor was applied. In visual observation of the test objects, the color of the lichens having received the inhibitor changed within a few hours.
   2-B) Five days after the inhibitor application to the test objects, blighted lichens were found. The overall observation of the test objects confirmed that about 65 % of the lichens in the inhibitor-applied area turned dark brown and, even after sprayed with water, they did not turn green. It is judged that the color change into dark brown is owing to the effect of the algae growth inhibitor 1-3.
   3-B) 20 days after the inhibitor application thereto, the test objects were again inspected. Almost all the lichens in the inhibitor-applied area were dark brown, and this confirms the blighted condition of the lichens. Accordingly, it is judged that the algae growth inhibitor 1-3 was effective to kill the lichens.
   4-B) One and a half months after the inhibitor application thereto, the test objects were inspected. More blighted lichens were found, and some blighted lichens (dead lichens) peeled away. This confirms the practicable effect of the algae growth inhibitor 1-3.
   5-B) Six and a half months after the inhibitor application thereto, the test objects were inspected. More blighted lichens peeled away, and the ratio of the blighted lichens that had peeled away was about 90 % of all the blighted lichens. Accordingly, the effect of the algae growth inhibitor 1-3 is more remarkable.
   6-B) One year after the inhibitor application thereto, the test objects were inspected. Almost all the lichens were blighted, and the blighted lichens peeled away. As a result, the tested square area of about 10 cm² to which the inhibitor had been applied became exposed out, or that is, the area of the test object restored its original slate face. This confirms that the effect of the algae growth inhibitor 1-3 lasted as such even after one year.
   7-B) One and a half years after the inhibitor application thereto, the test objects were inspected. In this stage, the condition as in the stage after one year was confirmed as such, and reproduction of no lichens was seen. Accordingly, this supports the long-lasting effect of the algae growth inhibitor 1-3.
   8-B) Three and a half years after the inhibitor application thereto, the test objects were inspected. Reproduction of few lichens was seen. Accordingly, this further supports the long-lasting effect of the algae growth inhibitor 1-3.
<4> Table 4 sets out the effect of the algae growth inhibitor that comprises usnic acid as the chemical (A) and diethylene glycol dimethyl ether as the organic solvent (B), and the inhibitor was applied to test objects. This is described.
   The chemical (A), usnic acid and the organic solvent (B), diethylene glycol dimethyl ether were mixed and dissolved to prepare an algae growth inhibitor 1-4. The resulting mixture, the algae growth inhibitor 1-4 was tested for its algae growth inhibiting effect.
   1-C) The algae growth inhibitor 1-4 was applied to test objects each in an area of about 10 cm² thereof. Lichens were growing in the site to which the inhibitor was applied. In visual observation of the test objects, the color of the lichens having received the inhibitor changed within a few hours.
   2-C) Four days after the inhibitor application to the test objects, blighted lichens were found. The overall observation of the test objects confirmed that about 85 % of the lichens in the inhibitor-applied area turned dark brown and, even after sprayed with water, they did not turn green. It is judged that the color change into dark brown is owing to the effect of the algae growth inhibitor 1-4.
   3-C) 30 days after the inhibitor application thereto, the test objects were again inspected. All the lichens in the inhibitor-applied area were dark brown, and this confirms the blighted condition of the lichens. Accordingly, it is judged that the algae growth inhibitor 1-4 was effective to kill the lichens.
   4-C) One and a half months after the inhibitor application thereto, the test objects were inspected. More blighted lichens were found, and some blighted lichens (dead lichens) peeled away. This confirms the practicable effect of the algae growth inhibitor 1-4.
   5-C) Six and a half months after the inhibitor application thereto, the test objects were inspected. More blighted lichens peeled away, and the ratio of the blighted lichens that had peeled away was about 93 % of all the blighted lichens. Accordingly, the effect of the algae growth inhibitor 1-4 is more remarkable.
   6-C) One year after the inhibitor application thereto, the test objects were inspected. Almost all the lichens were blighted, and the blighted lichens peeled away. As a result, the tested square area of about 10 cm² to which the inhibitor had been applied became exposed out, or that is, the area of the test object restored its original slate face. This confirms that the effect of the algae growth inhibitor 1-4 lasted as such even after one year.
   7-C) One and a half years after the inhibitor application thereto, the test objects were inspected. In this stage, the condition as in the stage after one year was confirmed as such, and reproduction of no lichens was seen. Accordingly, this supports the long-lasting effect of the algae growth inhibitor 1-4.
   8-C) Three and a half years after the inhibitor application thereto, the test objects were inspected. Reproduction of no lichens was seen. Accordingly, this further supports the long-lasting effect of the algae growth inhibitor 1-4.
Tables 1 to 4 summarise the results of the test examples, as follows:

**Table 1**

| [Algae Growth Inhibitor 1-1] | | |
|---|---|---|
| <1> Chemical (A) Anthraquinone-carboxylic Acid | | |
| Organic Solvent (B) Ethylene Glycol | | |
| <2> Applied Area about 10 cm² | | |
| <3> Test Object Lichens (*Physciella melanchra*) grown on corrugated slate plates | | |

| | Time (after inhibitor application) | Visual Observation of the Condition of the Algae Growth Inhibitor Applied to Test Objects |
|---|---|---|
| 1) | A few hours after application | Lichens changed the color within a few hours after the inhibitor application thereto. |
| 2) | 3 days after application | Almost all the lichens turned dark brown, and even after sprayed with water, they did not turn green. |
| 3) | 17 days after application | Almost all the lichens more remarkably turned dark brown, and some of them blighted. |
| 4) | 1 month after application | Some blighted lichens (dead lichens) peeled away. |
| 5) | 6 months after application | More blighted lichens peeled away, and the ratio of the peeled lichens was about 80 %. |
| 6) | 1 year after application | Almost all the blighted lichens peeled away, and the tested square area of about 10 cm² became exposed out and the area restored its original slate face. |
| 7) | 1.5 years after application | Reproduction of no lichens was confirmed. |
| 8) | 3.5 years after application | Reproduction of no lichens was confirmed. |

**Table 2**

| [Algae Growth Inhibitor 1-2] | | |
|---|---|---|
| <1> Chemical (A) Coumarin | | |
| Organic Solvent (B) Diethylene Glycol Dimethyl Ether | | |
| <2> Applied Area about 10 cm² | | |
| <3> Test Object Lichens (*Physciella melanchra*) grown on corrugated slate plates | | |

| | Time (after inhibitor application) | Visual Observation of the Condition of the Algae Growth Inhibitor Applied to Test Objects |
|---|---|---|
| 1-A) | A few hours after application | Lichens changed the color within a few hours after the inhibitor application thereto. |
| 2-A) | 3 days after application | About 70 % of the lichens turned dark brown, and even after sprayed with water, they did not turn green. |
| 3-A) | 17 days after application | They turned dark brown remarkably, and some of them were blighted. |
| 4-A) | 1 month after application | They turned dark brown more remarkably, and were blighted. Some blighted lichens (dead lichens) peeled away. |
| 5-A) | 6 months after application | More blighted lichens peeled away, and the ratio of the peeled lichens was about 90 %. |
| 6-A) | 1 year after application | Almost all the blighted lichens peeled away, and the tested square area became exposed out and it restored its original slate face. |
| 7-A) | 1.5 years after application | Reproduction of no lichens was confirmed. |
| 8-A) | 3.5 years after application | Reproduction of no lichens was confirmed. |

**Table 3**

| [Algae Growth Inhibitor 1-3] | | |
|---|---|---|
| <1> Chemical (A) 2-(4-Thiazolyl)benzimidazole | | |
| Organic Solvent (B) Methyl Isobutyl Ketone | | |
| <2> Applied Area about 10 cm² | | |
| <3> Test Object Lichens (*Physciella melanchra*) grown on corrugated slate plates | | |

| | Time (after inhibitor application) | Visual Observation of the Condition of the Algae Growth Inhibitor Applied to Test Objects |
|---|---|---|
| 1-B) | A few hours after application | Lichens changed the color within a few hours after the inhibitor application thereto. |
| | | |
| 2-B) | 5 days after application | About 65 % of the lichens turned dark brown, and even after sprayed with water, they did not turn green. |
| | | |
| 3-B) | 20 days after application | Almost all of them turned dark brown remarkably, and some of them were blighted. |
| | | |
| 4-B) | 1.5 month after application | Some blighted lichens (dead lichens) peeled away. |
| | | |
| 5-B) | 6.5 months after application | More blighted lichens peeled away, and the ratio of the peeled lichens was about 90 %. |
| | | |
| 6-B) | 1 year after application | Almost all the blighted lichens peeled away, and the tested square area of about 10 cm² became exposed out and it restored its original slate face. |
| | | |
| 7-B) | 1.5 years after application | Reproduction of no lichens was confirmed. |
| | | |
| 8-B) | 3.5 years after application | Reproduction of no lichens was confirmed. The long-lasting algae growth inhibiting effect was confirmed. |

**Table 4**

| [Algae Growth Inhibitor 1-4] | | |
|---|---|---|
| <1> Chemical (A) Usnic Acid | | |
| Organic Solvent (B) Diethylene Glycol Dimethyl Ether | | |
| <2> Applied Area about 10 cm² | | |
| <3> Test Object Lichens (*Physciella melanchra*) grown on corrugated slate plates | | |

| | Time (after inhibitor application) | Visual Observation of the Condition of the Algae Growth Inhibitor Applied to Test Objects |
|---|---|---|
| 1-C) | A few hours after application | Lichens changed the color within a few hours after the inhibitor application thereto. |
| | | |
| 2-C) | 4 days after application | About 85 % of the lichens turned dark brown, and even after sprayed with water, they did not turn green. |
| | | |
| 3-C) | 30 days after application | They turned dark brown remarkably, and some of them were blighted. |
| | | |
| 4-C) | 1.5 month after application | They turned dark brown more remarkably, and were blighted. Some blighted lichens (dead lichens) peeled away. |
| | | |
| 5-C) | 6.5 months after application | More blighted lichens peeled away, and the ratio of the peeled lichens was about 93 %. |
| | | |
| 6-C) | 1 year after application | Almost all the blighted lichens peeled away, and the tested square area became exposed out and it restored its original slate face. |
| | | |
| 7-C) | 1.5 years after application | Reproduction of no lichens was confirmed. |
| | | |
| 8-C) | 3.5 years after application | Reproduction of no lichens was confirmed. The long-lasting algae growth inhibiting effect was confirmed. |

### [Advantages of the Invention]

The invention of claim 1 is an algae growth inhibitor for green-blue algae, lichens and others, which employs the constitution as above and is characterized by the following advantages: The algae growth inhibitor is kept in repeated contact with external water for repeated diffusion and dilution thereof, and in that condition, the chemical (A), or that is, the constitutive element of the inhibitor that has the ability to inhibit the growth of algae is deposited in the voids of the object to be protected and is crystallized therein, and the area inside the voids is all the time kept filled with an saturated solution of the chemical (A). Satisfying these requirements, the invention is to ensure the condition of long-term lasting back diffusion of the chemical (A) on the surface of the object to thereby sustain the algae growth inhibiting effect of the inhibitor for a long period of time. In addition, the algae to which the algae growth inhibitor has been applied are blighted and peeled away, and the algae growth inhibitor retards and weakens the growth of algae and is therefore effective for removing algae. Still another characteristic of the algae growth inhibitor is that it is usable not damaging the surface and the entire of the object to which it has been applied.

The invention of claim 2 is an algae growth inhibitor for green-blue algae, lichens and others, which is subsidiary to the algae growth inhibitor of claim 1 and employs the constitution as above. Accordingly, this algae growth inhibitor attains the same effect as in claim 1, and its effect lasts long.

The invention of claim 3 is a method for inhibiting the growth of blue-green algae, lichens and others, which employs the constitution as above and in which the algae growth inhibitor of claim 1 or 2 is used and its effect lasts long. The algae growth inhibitor used in the method attains the long-lasting effect, as in claims 1 and 2.

## Claims

1. An algae growth inhibitor for blue-green algae, lichens and others, which comprises a chemical (A) having a low solubility in water and having the ability to inhibit the growth of algae, and an organic solvent (B) that dissolves the chemical (A) with the solubility of the chemical (A) in it being larger than that in water, and is miscible with water.

2. The algae growth inhibitor for blue-green algae, lichens and others as claimed in claim 1, wherein the chemical (A) crystallizes at least in the fine voids inside the object to be protected or in the recesses of the rough surface of the object to stay therein for a long period of time, and the crystallized chemical (A) dissolves in the external water in the voids or in the surface recesses and continues gradually dissolving out on the surface of the object to thereby keep its action (effect) of algae growth inhibition for blue-green algae, lichens and others for a long period of time.

3. An algae growth inhibitor according to claim 1 or claim 2, wherein chemical (A) is usnic acid, 2-(4-thiazolyl)benzimidazole, anthraquinone-carboxylic acid, anthraquinone, or coumarin.

4. An algae growth inhibitor according to any of claims 1 to 3, wherein the organic solvent is chosen from ketone solvents; alcohol solvents; and ether solvents.

5. An algae growth inhibitor according to claim 3, wherein the organic solvent is methyl isobutyl ketone, ethylene glycol, diethylene glycol, furfuryl alcohol, diethylene glycol dimethyl ether, diethylene-methanol dimethyl ether.

6. An algae growth inhibitor composition according to any preceding claim wherein the chemical (A) and the organic solvent are mixed in a weight ratio of 0.5:100.

7. A method of inhibiting algal growth on a porous surface, comprising applying a composition according to claim 6 to the surface

8. A method of algae growth inhibition for blue-green algae, lichens and others, which is **characterized in that** the algae growth inhibitor of claim 1 having penetrated at least into the fine voids inside the object coated or sprayed with it or into the recesses of the rough surface of the object comes in contact with external water such as rainwater or flowing water and, through diffusion or dilution thereof, deposits the chemical (A) that corresponds to the difference between the solubility thereof in the organic solvent (B) and that in water, in the external water in the voids or in the surface recesses of the object, and the chemical (A) is thus successively deposited while forming a layer of the chemical (A) crystallized in the voids or in the surface recesses, and then, when the area inside the voids and in the surface recesses is as near as possible to an aqueous solution, the chemical (A) layer serves as a supply source of the chemical (A), and the deposited chemical (A) gradually dissolves out on the surface of the object through contact with the external water at the openings of the voids or at the openings of the surface recesses and keeps its action of algae growth inhibition for a long period of time to kill the blue-green algae, lichens and others around the object.
